# EUROPÄISCHE PATENTSCHRIFT

(11) **EP 2 976 832 B1**
(45) Veröffentlichungstag und Bekanntmachung des Hinweises auf die Patenterteilung: **29.04.2020**
(21) Anmeldenummer: 14707998.2
(22) Anmeldetag: 03.03.2014
(51) Int. Cl.: H02M 7/00

(54) **WECHSELRICHTER MIT MINDESTENS EINER WECHSELRICHTERBRÜCKE ZWISCHEN ZWEI BUSBARS**
INVERTER HAVING AT LEAST ONE INVERTER BRIDGE BETWEEN TWO BUSBARS
ONDULEUR COMPRENANT AU MOINS UN PONT ENTRE DEUX BARRES OMNIBUS

(30) Priorität: 18.03.2013 DE 102013102707
(43) Veröffentlichungstag der Anmeldung: 27.01.2016
(73) Patentinhaber: SMA Solar Technology AG, 34266 Niestetal (DE)
(72) Erfinder: NESEMANN, Karl, 34260 Kaufungen (DE); FALK, Andreas, 34131 Kassel (DE); SCHNEIDER, Henning, 37235 Hessisch-Lichtenau (DE)
(74) Vertreter: Lahnor, Peter
(86) Internationale Anmeldenummer: PCT/EP2014/054049
(87) Internationale Veröffentlichungsnummer: WO 2014/146889

(56) Entgegenhaltungen:
- EP-A2- 1 445 853
- EP-A2- 1 553 687
- US-A1- 2011 221 268
- US-A1- 2013 063 067
- IGARASHI S ET AL: "Design of high reliability packaging for Fuji High Power Module", ELECTRICAL MACHINES AND SYSTEMS (ICEMS), 2011 INTERNATIONAL CONFERENCE ON, IEEE, 20. August 2011 (2011-08-20), Seiten 1-6, XP032020710, DOI: 10.1109/ICEMS.2011.6073948 ISBN: 978-1-4577-1044-5
- Semikron: "Dealing with IGBT Modules", , 4 December 2007 (2007-12-04), XP055142550, Retrieved from the Internet: URL:http://www.evbmw.com/igbt.pdf [retrieved on 2014-09-25]

## Beschreibung

### TECHNISCHES GEBIET DER ERFINDUNG

Die Erfindung bezieht sich auf einen Wechselrichter mit einer eingangsseitig zwischen zwei DC-Busbars geschalteten und ausgangsseitig an einen AC-Ausgang angeschlossenen Wechselrichterbrücke, wobei die Wechselrichterbrücke zwischen der AC-Ausgangsleitung und jeder DC-Busbar eine Teilschaltung mit mehreren Halbleiterschaltern aufweist.

In der vorliegenden Beschreibung wird der Begriff "DC-Busbar" für eine Sammelschiene auf einem elektrischen Potential verwendet. Eine Wechselrichterbrücke erstreckt sich zwischen zwei solcher DC-Busbars.

### STAND DER TECHNIK

Ein bekannter Zentralwechselrichter mit der Modellbezeichnung "CP" der Anmelderin weist einen Wechselrichter mit einer eingangsseitig zwischen zwei DC-Busbars geschalteten und ausgangsseitig an eine AC-Ausgangsleitung angeschlossenen Wechselrichterbrücke auf, wobei die Wechselrichterbrücke zwischen der AC-Ausgangsleitung und jeder DC-Busbar eine Parallelschaltung von zwei Halbleiterschaltern aufweist. Durch die Parallelschaltung der Halbleiterschalter wird eine gegenüber jeweils nur einem Halbleiterschalter erhöhte Stromtragfähigkeit erreicht. Der bekannte Wechselrichter ist daher insbesondere für hohe über die AC-Ausgangsleitung ausgegebene Wechselströme geeignet. In der konkreten konstruktiven Ausgestaltung weist der bekannte Wechselrichter zwei nebeneinander angeordnete Halbleiterbausteine auf, die jeweils zwei parallel geschaltete Halbleiterschalter ausbilden. Die Halbleiterbausteine sind über Anschlüsse an in gleicher Raumrichtung ausgerichteten Anschlussseiten an die beiden DC-Busbars und den AC-Ausgang angeschlossen. Dabei verlaufen die beiden DC-Busbars einander überlappend in zueinander parallelen Ebenen. Ein Anschlusselement, das zu dem AC-Ausgang führt, ist in einem nicht von den DC-Busbars überlappten Bereich an beide Halbleiterbausteine angeschlossen. Bei dem bekannten Wechselrichter ist nicht nur eine solche Wechselrichterbrücke vorgesehen, sondern mehrere gleichartige Wechselrichterbrücken sind an Ränder derselben beiden DC-Busbars angeschlossen. Dabei sind die Halbleiterbausteine mit ihren den Anschlussseiten gegenüberliegenden Montageseiten auf einem gemeinsamen Kühlkörper montiert.

Bei einem anderen bekannten Wechselrichter mit einer eingangsseitig zwischen zwei DC-Busbars geschalteten und ausgangsseitig an eine AC-Ausgangsleitung angeschlossenen Wechselrichterbrücke weist die Wechselrichterbrücke zwischen der AC-Ausgangsleitung und jeder DC-Busbar eine Reihenschaltung von zwei Halbleiterschaltern auf. Die Reihenschaltungen der Halbleiterschalter dienen dazu, die über der Wechselrichterbrücke und/oder zwischen dem AC-Ausgang und den beiden DC-Busbars anliegenden Spannungen über mehreren Halbleiterschaltern abfallen zu lassen. Die einzelnen Halbleiterschalter können daher eine geringere Spannungsfestigkeit aufweisen als bei einer Halbbrücke, die jeweils nur einen Halbleiterschalter zwischen der AC-Ausgangsleitung und jeder DC-Busbar aufweist. Ein solcher Wechselrichter ist daher besonders für hohe Eingangsspannungen geeignet.

Aus der DE 100 44 570 A1 ist ein Wechselrichter mit einem modularen Aufbau bekannt. Der Wechselrichter umfasst eine Zentraleinheit und eine Mehrzahl von Leistungseinheiten. Die Zentraleinheit weist einen Wechselspannungsausgang sowie eine Steckverbinderbuchse auf. Die Leistungseinheiten weisen jeweils einen Gleichspannungseingang sowie eine Steckverbinderbuchse und einen Steckverbinderstecker auf. Eine Leistungseinheit kann mit ihrem Steckverbinderstecker in die Steckerverbinderbuchse der Zentraleinheit eingesteckt werden. Weitere Leistungseinheiten können dann jeweils mit ihrem Steckverbinderstecker in die Steckverbinderbuchse der zuvor angeschlossenen Leistungseinheit eingesteckt werden. Jede Leistungseinheit weist einen Inverter und einen diesen treibenden Controller auf.

Aus der DE 10 2005 060 354 A1 ist ein modulares Umrichtersystem bekannt. Dieses weist ein Umrichter-Grundgerät und mindestens ein Umrichter-Zusatzgerät auf, wobei diese Geräte untereinander mittels ihrer Netz- und Last-Stromschiene und mittels einer Kommunikationsleitung seitlich steckbar sind und dadurch parallel geschaltet werden.

Aus der WO 94/14227 A1 ist ein Wechselrichter mit den Merkmalen des Oberbegriffs des unabhängigen Patentanspruchs 1 bekannt. Der Wechselrichter ist dreiphasig und weist für jede Phase eine Wechselrichterbrücke mit zwei nebeneinander auf einem Kühlkörper angeordneten Halbleiterbausteinen auf. Jeder Halbleiterbaustein umfasst einen Halbleiterschalter. Oberhalb des Kühlkörpers verlaufen zunächst zwei DC-Busbars, an die die Wechselrichterbrücken eingangsseitig angeschlossen sind. Darüber verlaufen in einer weiteren Ebene parallel zu den DC-Busbars plattenförmige Anschlusselemente für die einzelnen Phasen des AC-Ausgangs des Wechselrichters. Diese plattenförmigen Anschlusselemente sind gegenüber den DC-Busbars und die DC-Busbars sind gegeneinander elektrisch isoliert. Anschlüsse der oberen DC-Busbar an die Halbleiterbausteine erstrecken sich durch die untere DC-Busbar, und Anschlüsse von den plattenförmigen Anschlusselementen zu den Halbleiterbausteinen erstrecken sich durch beide DC-Busbars.

Aus der DE 601 19 865 T2, einer Übersetzung der EP 1 195 884 B1, ist ein dreiphasiger Wechselrichter mit drei Paaren von Halbleiterschaltern bekannt, die zwischen zwei DC-Busbars angeordnet sind. An einen Mittelpunkt jedes Paars angeschlossene ausgangsseitige Anschlusselemente verlaufen ebenfalls zwischen den DC-Busbars. Eine derartige paarweise Zwischenordnung von Halbleiterschaltern zwischen DC-Busbars ist auch aus der JP 2007215396 A bekannt.

Die US 2009/0257212 A1 beschreibt einen Halbleiterbaustein mit zwei zwischen zwei Eingangsanschlüsse in Reihe geschalteten Halbleiterschaltern und einem an den Mittelpunkt der Schalter angeschlossenen Ausgangsanschluss. Die Eingangsanschlüsse sind an einer Seite des Gehäuses des Halbleiterbausteins übereinander angeordnet. Der Ausgangsanschluss ist an der gegenüberliegenden Seite des Gehäuses vorgesehen.

### AUFGABE DER ERFINDUNG

Der Erfindung liegt die Aufgabe zugrunde, einen Wechselrichter mit den Merkmalen des Oberbegriffs des unabhängigen Patentanspruchs 1 aufzuzeigen, der mit geringem Aufwand aus Bauteilen montiert werden kann, die im Wesentlichen identisch mit Bauteilen sind, die auch für einen an andere Strom- und/oder Spannungsverhältnisse angepassten Wechselrichter verwendbar sind.

### LÖSUNG

Die Aufgabe der Erfindung wird durch einen Wechselrichter mit den Merkmalen des unabhängigen Patentanspruchs 1 gelöst. Bevorzugte Ausführungsformen des neuen Wechselrichters sind in den abhängigen Patentansprüchen definiert.

### BESCHREIBUNG DER ERFINDUNG

Die Erfindung betrifft einen Wechselrichter mit einer eingangsseitig zwischen zwei DC-Busbars geschalteten und ausgangsseitig an einen AC-Ausgang angeschlossenen Wechselrichterbrücke, wobei die beiden DC-Busbars einander überlappend in zueinander parallelen Ebenen verlaufen, wobei die Wechselrichterbrücke zwischen dem AC-Ausgang und jeder DC-Busbar eine Teilschaltung mit mehreren Halbleiterschaltern aufweist, wobei Halbleiterbausteine, die die beiden Teilschaltungen ausbilden, insbesondere längs eines gemeinsamen Rands der beiden DC-Busbars nebeneinander angeordnet sind, wobei die Halbleiterbausteine über Anschlüsse an die beiden DC-Busbars und den AC-Ausgang angeschlossen sind, wobei ein Anschlusselement, das zu dem AC-Ausgang führt, auf der den Halbleiterbausteinen zugekehrten Seite der DC-Busbars in einem von den DC-Busbars überlappten Bereich beginnt und die Halbleiterbausteine der beiden Teilschaltungen dort miteinander verbindet.

Bei einem erfindungsgemäßen Wechselrichter mit einer eingangsseitig zwischen zwei DC-Busbars geschalteten und ausgangsseitig an einen AC-Ausgang angeschlossen Wechselrichterbrücke, die zwischen der AC-Ausgangsleitung und jeder DC-Busbar eine Reihenschaltung von Halbleiterschaltern aufweist, sind Halbleiterbausteine, die die beiden Reihenschaltungen ausbilden, nebeneinander angeordnet und über Anschlüsse an die beiden DC-Busbars und an den AC-Ausgang angeschlossen. Dabei verlaufen die beiden DC-Busbars einander überlappend in zueinander parallelen Ebenen. Ein Anschlusselement, das zu dem AC-Ausgang führt, beginnt auf der den Halbleiterschaltern zugekehrten Seite der DC-Busbars in einem von den DC-Busbars überlappten Bereich und verbindet die Halbleiterbausteine der beiden Reihenschaltungen dort miteinander.

Diese Ausführungsform des erfindungsgemäßen Wechselrichters kann sich von einem bekannten Wechselrichter, dessen Wechselrichterbrücke zwischen einer AC-Ausgangsleitung und jeder DC-Busbar eine Parallelschaltung von Halbleiterschaltern aufweist, ausschließlich durch die Anschlüsse der Halbleiterbausteine unterscheiden, an die die DC-Busbars einerseits und die AC-Ausgangsleitung andererseits angeschlossen sind. Ungewöhnlich ist dabei, dass sich das Anschlusselement, das Teil der Ausgangsleitung ist, bis unter die DC-Busbars erstreckt. Diese ungewöhnliche Konstellation ermöglicht jedoch die Verwendung von im Wesentlichen den gleichen Bauteilen wie bei einem bekannten Wechselrichter, dessen Wechselrichterbrücke parallel geschaltete Halbleiterschalter aufweist, und dies auch in einer im Wesentlichen gleichen Anordnung.

Die Anschlüsse der Halbleiterbausteine können an in gleicher Raumrichtung ausgerichteten Anschlussseiten der Halbleiterbausteine ausgebildet sein, und das Anschlusselement kann zwischen den Anschlüssen der Halbleiterbausteine der beiden Teilschaltungen unter den DC-Busbars hervortreten. Durch einen seitlichen Abstand der Halbleiterbausteine oder zumindest ihrer Anschlüsse kann dann für das Anschlusselement ein ausreichender Leitungsquerschnitt ohne komplizierten Anschluss der Busbars an die Anschlüsse und ohne komplexe Gestalt des Anschlusselements realisiert werden. So kann das Anschlusselement ein im Wesentlichen ebenes Metallblech, beispielsweise aus Kupfer sein.

Ein solches Metallblech kann unter den DC-Busbars in einer weiteren zu den DC-Busbars parallelen Ebene verlaufen.

In einer anderen Ausführungsform sind zwar die Anschlüsse der Halbleiterbausteine an die beiden DC-Busbars an in gleicher Raumrichtung ausgerichteten Eingangsanschlussseiten der Halbleiterbausteine, die Anschlüsse an das Anschlusselement aber an in paarweise einander entgegengerichteten Ausgangsanschlussseiten der Halbleiterbausteine ausgebildet. Das Anschlusselement tritt dann zwischen den Halbleiterbausteinen der beiden Teilschaltungen unter den DC-Busbars hervor und kann so einen größeren Abstand zu den DC-Busbars einhalten. Dies ist beispielsweise hinsichtlich einer möglichst geringen kapazitiven Kopplung zwischen dem Anschlusselement und den DC-Busbars vorteilhaft. Die seitlichen Anschlüsse für das Anschlusselement dieser Ausführungsform können auch zusätzlich zu den in gleicher Raumrichtung wie die Anschlüsse an die DC-Busbars ausgerichteten Anschlüsse für das Anschlusselement der zuvor beschriebenen Ausführungsform vorgesehen sein. Dann kann das Anschlusselement wahlweise oben oder seitlich an die Halbleiterbausteine angeschlossen werden.

Die eine DC-Busbar kann jeweils dort, wo die andere DC-Busbar an einen Anschluss der Halbleiterbausteine angeschlossen ist, eine Ausnehmung aufweisen. Bei der den Halbleiterbausteinen abgekehrten DC-Busbar erleichtern diese Ausnehmungen das Anschließen der anderen DC-Busbar. Bei der den Halbleiterbausteinen zugekehrten DC-Busbar lassen die Ausnehmungen die elektrische Verbindung bis zu der anderen DC-Busbar hindurch treten.

Zwischen den beiden DC-Busbars und zwischen der den Halbleiterbausteinen zugekehrten DC-Busbar und dem Anschlusselement kann jeweils eine Isolationsschicht angeordnet sein. Grundsätzlich kann eine ausreichende elektrische Isolation auch durch einen Luftspalt bewirkt werden. Dann besteht jedoch die Gefahr eines Kurzschlusses durch Eintritt von Verunreinigungen.

Vorzugsweise ist bei dem erfindungsgemäßen Wechselrichter jede der Teilschaltungen durch einen Halbleiterbaustein ausgebildet. Das heißt, die Wechselrichterbrücke weist zwei Halbleiterbausteine auf. Jeder Baustein umfasst dabei mindestens zwei Halbleiterschalter.

Alternativ ist jedoch auch möglich, dass jede der Teilschaltungen erst durch die elektrische Verbindung von zwei oder mehreren Halbleiterbausteinen entsteht. Insbesondere kann ein Halbleiterbaustein jeweils mindestens eine Reihenschaltung von zwei Halbleiterschaltern ausbilden, und in jeder Teilschaltung können mindestens zwei nebeneinander angeordnete Halbleiterbausteine parallel geschaltet sein. Durch die in Reihe geschalteten Halbleiterschalter sind die Teilschaltungen für große Spannungen und durch die parallel geschalteten Halbleiterbausteine gleichzeitig für große Ströme ausgelegt.

Alle Halbleiterbausteine des erfindungsgemäßen Wechselrichters können baugleich sein, d. h. nicht nur baugleich mit Halbleiterbausteinen eines anderen Wechselrichters, dessen Wechselrichterbrücke statt Reihenschaltungen Parallelschaltungen von Halbleiterschaltern umfasst, sondern auch untereinander.

Die Verwendbarkeit der Halbleiterbausteine neben Wechselrichtern mit einer Wechselrichterbrücke, die Reihenschaltungen von Halbleiterschaltern aufweist, auch für Wechselrichter mit einer Wechselrichterbrücke, die Parallelschaltungen von Halbleiterschaltern aufweist, wird z. B. sichergestellt, indem die Halbleiterbausteine Reihenschaltungen ihrer Halbleiterschalter und an ihren Anschlussseiten Anschlüsse zu Zwischenpunkten aufweisen, die jeweils nach der Hälfte der Halbleiterschalter jeder Reihenschaltung ausgebildet sind. Dabei können diese Anschlüsse zu den Zwischenpunkten in einem nicht durch die DC-Busbars abgedeckten Bereich der die Reihenschaltungen ausbildenden Halbleiterbausteine angeordnet sein. Wenn ein Halbleiterbaustein mehrere parallele Reihenschaltungen von Halbleiterschaltern aufweist, ist ein gemeinsamer Anschluss zu den Zwischenpunkten aller seiner Reihenschaltungen vorgesehen.

Auch wenn eine größere Anzahl von Halbleiterschaltern bei dem erfindungsgemäßen Wechselrichter vorgesehen sein kann, wobei eine gerade Anzahl von Halbleiterschaltern je Teilschaltung bevorzugt ist, so dass Zwischenpunkte nach jeweils der Hälfte der Halbleiterschalter einer Reihenschaltung ausgebildet werden können, so ist die bevorzugte Anzahl der Halbleiterschalter je Halbleiterbaustein und Teilschaltung zwei.

Halbleiterbausteine mit einer Reihenschaltung von zwei Halbleiterschaltern und zugänglichem Zwischenpunkt sind kostengünstig in hoher Qualität verfügbar.

Derartige verfügbare Halbleiterbausteine weisen häufig jeweils zwei Anschlüsse für das Anschließen jeder DC-Busbar an eine der Reihenschaltungen und für das Anschließen des Anschlusselements an jede der Reihenschaltungen auf. Diese doppelte Anbindung verteilt im Normalfall die Ströme auf die jeweils zwei Anschlüsse und sorgt für eine Ausfallsicherheit bei Störungen eines Anschlusses.

Ein erfindungsgemäßer Wechselrichter weist typischerweise nicht nur eine, sondern mehrere gleichartige Wechselrichterbrücken auf. Diese gleichartigen Wechselrichterbrücken können unter Verwendung baugleicher Bauteile ausgebildet sein. Dabei können konkret die die Teilschaltungen mehrerer Wechselrichterbrücken ausbildenden Halbleiterbausteine an einen gemeinsamen Rand derselben DC-Busbars angeschlossen sein.

Wenn die die Teilschaltungen ausbildenden Halbleiterbausteine mit ihren den DC-Busbars abgewandten Montageseiten auf einem Kühlkörper des erfindungsgemäßen Wechselrichters montiert sind, können sie insbesondere auf einem Rand desselben Kühlkörpers montiert sein. Auf diese Weise ist eine sehr einfache Parallelschaltung mehrerer, eingangsseitig an dieselben DC-Busbars angeschlossener Wechselrichterbrücken möglich.

Bei einem Wechselrichter mit einer eingangsseitig zwischen zwei DC-Busbars geschalteten und ausgangsseitig an einen AC-Ausgang angeschlossenen Wechselrichterbrücke, wobei die beiden DC-Busbars einander überlappend in zueinander parallelen Ebenen verlaufen, wobei die Wechselrichterbrücke zwischen dem AC-Ausgang und jeder DC-Busbar eine Parallelschaltung von mehreren Halbleiterschaltern aufweist, wobei Halbleiterbausteine, die die beiden Parallelschaltungen ausbilden, nebeneinander angeordnet sind und wobei die Halbleiterbausteine über Anschlüsse an die beiden DC-Busbars und den AC-Ausgang angeschlossen sind, beginnt ein Anschlusselement, das zu dem AC-Ausgang führt, erfindungsgemäß auf der den Halbleiterschaltern zugekehrten Seite der DC-Busbars in einem von den DC-Busbars überlappten Bereich und verbindet dort die Halbleiterbausteine der beiden Teilschaltungen miteinander.

Das heißt, im Wesentlichen aus gleichen Bauteilen in gleicher Anordnung aufgebaute Wechselrichter, deren Wechselrichterbrücken Reihenschaltungen von Halbleiterschaltern oder Parallelschaltungen von Halbleiterschaltern aufweisen, können erfindungsgemäß auch so ausgestaltet werden, dass bei Wechselrichterbrücken mit parallel geschalteten Halbleiterschaltern die Ausgangsleitungen unter den DC-Busbars der Wechselrichter beginnen. In diesem Fall können bei den Wechselrichtern, die Wechselrichterbrücken mit Reihenschaltungen von Halbleiterschaltern aufweisen, die Anschlusselemente in einem nicht durch die DC-Busbars abgedeckten Bereich an die Halbleiterbausteine der beiden Reihenschaltungen angeschlossen sein. Hierfür sind zwar anders ausgestaltete Halbleiterbausteine erforderlich als bei der oben beschriebenen ersten Ausführungsform der Erfindung, die von kommerziell verfügbaren Halbleitersteinen ausgeht. Umgekehrt liegen dann aber nur geringere Spannungen, wie sie bei Wechselrichterbrücken mit parallel geschalteten Halbleiterschaltern auftreten, in den Bereichen an, in denen die Anschlusselemente in einer weiteren Ebene unterhalb der DC-Busbars verlaufen.

In den Patentansprüchen sind beide Ausführungsformen der Erfindung nur in den Patentansprüchen 13 und 14 differenziert, wo die räumliche Lage der Anschlüsse zu den Zwischenpunkten der von allen Halbleiterbausteinen bereitgestellten Reihenschaltungen definiert ist. Nur in den Ausführungsformen der Erfindung mit in Reihe geschalteten Halbleiterschaltern in jeder Teilschaltung sind diese Anschlüsse in einem nicht durch die DC-Busbars abgedeckten Bereich der Halbleiterbausteine angeordnet, und können dort für einen auf denselben Halbleiterbausteinen basierenden Wechselrichter mit parallel geschalteten Halbleiterschaltern in jeder Teilschaltung kontaktiert werden. In den Ausführungsformen der Erfindung mit parallel geschalteten Halbleiterschaltern in jeder Teilschaltung sind die Anschlüsse zu allen Zwischenpunkten in dem durch die DC-Busbars abgedeckten Bereich der Halbleiterbausteine angeordnet. Zur Ausbildung eines auf denselben Halbleiterbausteinen basierenden Wechselrichters mit in Reihe geschalteten Halbleiterschaltern in jeder Teilschaltung muss der gemeinsame Rand der DC-Busbars zurück verlegt werden, um das Anschlusselement in einem nicht durch die DC-Busbars abgedeckten Bereich der Halbleiterbausteine anschließen zu können. Grundsätzlich ist in den Patentansprüchen anstelle einer "Reihenschaltung von Halbleiterschaltern" oder einer "Parallelschaltung von Halbleiterschaltern" allgemein auf eine "Teilschaltung mit mehreren Halbleiterschaltern" Bezug genommen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung unter Bezugnahme auf die beigefügten Zeichnungen weiter erläutert und beschrieben.
- **Fig. 1**: ist ein Prinzipschaltbild einer Wechselrichterbrücke mit parallel geschalteten Halbleiterschaltern.
- **Fig. 2**: illustriert eine Umsetzung der Wechselrichterbrücke gemäß Fig. 1 mit zwei Halbleiterbausteinen nach dem Stand der Technik.
- **Fig. 3**: ist ein schematisches Schaltbild einer Wechselrichterbrücke mit zwei Reihenschaltungen von Halbleiterschaltern.
- **Fig. 4**: illustriert eine erfindungsgemäße Umsetzung der Wechselrichterbrücke gemäß Fig. 3 mit denselben Halbleiterbausteinen wie in Fig. 2.
- **Fig. 5**: illustriert noch eine erfindungsgemäße Umsetzung der Wechselrichterbrücke gemäß Fig. 3 mit anderen Halbleiterbausteinen.
- **Fig. 6**: ist eine Seitenansicht der erfindungsgemäßen Umsetzung der Wechselrichterbrücke gemäß Fig. 5.
- **Fig. 7**: illustriert eine weitere erfindungsgemäße Umsetzung der Wechselrichterbrücke gemäß Fig. 1 durch zwei andere Halbleiterbausteine.
- **Fig. 8**: illustriert eine Umsetzung der Wechselrichterbrücke gemäß Fig. 3 mit den Halbleiterbausteinen gemäß Fig. 7.
- **Fig. 9**: illustriert noch eine weitere erfindungsgemäße Umsetzung der Wechselrichterbrücke gemäß Fig. 1 durch noch zwei andere Halbleiterbausteine; und
- **Fig. 10**: illustriert eine Umsetzung der Wechselrichterbrücke gemäß Fig. 3 mit den Halbleiterbausteinen gemäß Fig. 9.

### FIGURENBESCHREIBUNG

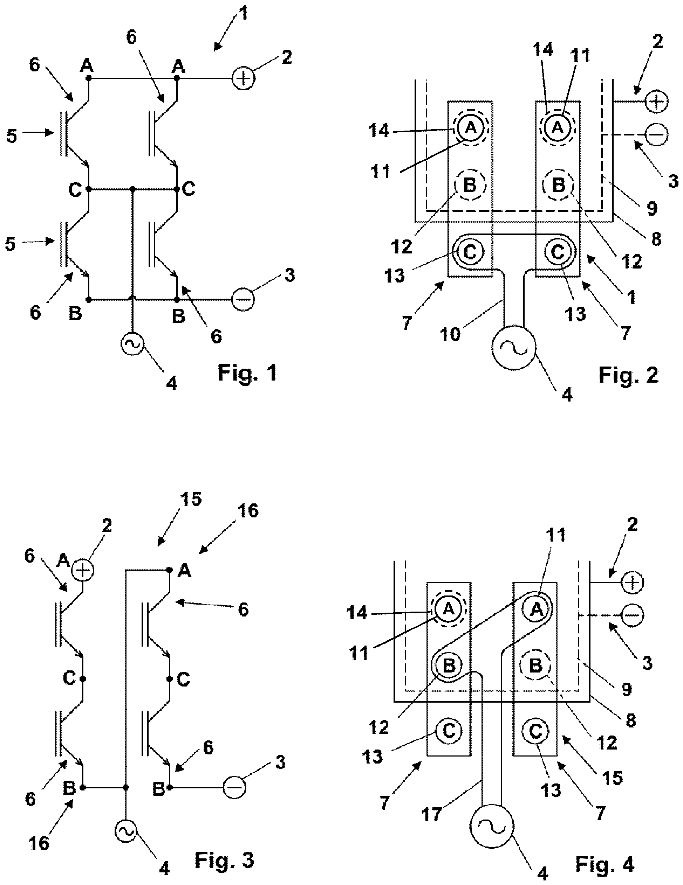

Die in **Fig. 1** dargestellte Wechselrichterbrücke 1 weist zwei DC-Eingänge 2 und 3 und einen AC-Ausgang 4 auf. Der DC-Eingang 2 ist hier für ein gegenüber dem DC-Eingang 3 positives Potential vorgesehen. Zwischen dem AC-Ausgang 4 und den DC-Eingängen 2 und 3 weist die Wechselrichterbrücke 1 jeweils eine Parallelschaltung 5 von zwei Halbleiterschaltern 6 auf. Über die Parallelschaltungen 5 hinweg sind die Halbleiterschalter 6 in Fig. 1 in eine linke und eine rechte Gruppe aufgeteilt und in jeder dieser Gruppen in Reihe geschaltet. Dabei sind die einander entsprechenden Anschlusspunkte der beiden Gruppen von Halbleiterschaltern 6 mit gleichen Buchstaben A, B und C versehen. Die Endpunkte A sind an den DC-Eingang 2 angeschlossen, die Endpunkte B an den DC-Eingang 3 und die Zwischenpunkte C an den AC-Ausgang 4.

**Fig. 2** illustriert eine Umsetzung der Wechselrichterbrücke 1 mit Hilfe von zwei baugleichen Halbleiterbausteinen 7, die jeweils eine Gruppe von Halbleiterschaltern 6 gemäß Fig. 1, d. h. zwei in Fig. 1 zwischen den Endpunkten A und B in Reihe geschaltete Halbleiterschalter 6 umfassen. Die Halbleiterbausteine 7 sind längs eines gemeinsamen Rands von zwei DC-Busbars 8 und 9 nebeneinander angeordnet. Die beiden DC-Busbars 8 und 9 bilden die DC-Eingänge 2 und 3. Zu dem AC-Ausgang 4 führt ein Anschlusselement 10. Die Anschlusspunkte A, B und C sind als Anschlüsse 11 bis 13 an einer den DC-Busbars 8 und 9 zugewandten Anschlussseite der Halbleiterbausteine 7 ausgebildet. Die Anschlüsse 11 sind dabei an die Busbar 8, die Anschlüsse 12 an die Busbar 9 und die Anschlüsse 13 an das Anschlusselement 10 angeschlossen. Dabei ragen die Anschlüsse 11 durch Ausnehmungen 14 in der zwischen der Busbar 8 und den Halbleiterbausteinen 7 verlaufenden Busbar 9 hindurch. Die Anschlüsse 13 sind in einem Bereich der Halbleiterbausteine 7 ausgebildet, der nicht von den Busbars 8 und 9 abgedeckt ist.

**Fig. 3** illustriert eine Wechselrichterbrücke 15, die grundsätzlich aus denselben Halbleiterschaltern 6 aufgebaut sein kann, wie die Wechselrichterbrücke 1 gemäß Fig. 1. Die Wechselrichterbrücke 15 weist jedoch zwischen ihrem AC-Ausgang 4 und ihren beiden DC-Eingängen 2 und 3 jeweils eine Reihenschaltung 16 aus zwei Halbleiterschaltern 6 auf. Dabei ist die Lage der Anschlusspunkte A bis C der Halbleiterschalter 6 räumlich genauso angeordnet wie in Fig. 1.

**Fig. 4** illustriert eine Realisation der Wechselrichterbrücke 15 gemäß Fig. 3 mit denselben Halbleiterbausteinen 7, wie sie auch für die Wechselrichterbrücke 1 in Fig. 2 verwendet sind. Auch die räumliche Anordnung der Halbleiterbausteine 7 teilweise unterhalb der Busbars 8 und 9 ist dieselbe wie in Fig. 2. Ein Anschlusselement 17 zum Anschluss der beiden Halbleiterbausteine 7 an den AC-Ausgang 4 ist jedoch anders ausgebildet als das Anschlusselement 10 gemäß Fig. 2. Das Anschlusselement 14 greift bis unter die DC-Busbars 8 und 9 und ist dort an den Anschluss 12 des einen und den Anschluss 11 des anderen Halbleiterbausteins 7 angeschlossen. Weiterhin ist die DC-Busbar 8 an den verbleibenden Anschluss 11 des einen und die DC-Busbar 9 an den verbleibenden Anschluss 12 des anderen Halbleiterbausteins 7 angeschlossen. Die Anschlüsse 13 der Halbleiterbausteine 7 bleiben in dieser Realisation frei. Bis auf diese Anschlusskonstellation und die dafür notwendigen unterschiedlichen Anschlusselemente 10 und 17 sind die Bauteile 7 bis 9 und ihre räumliche Anordnung in den Fig. 2 und 4 gleich.

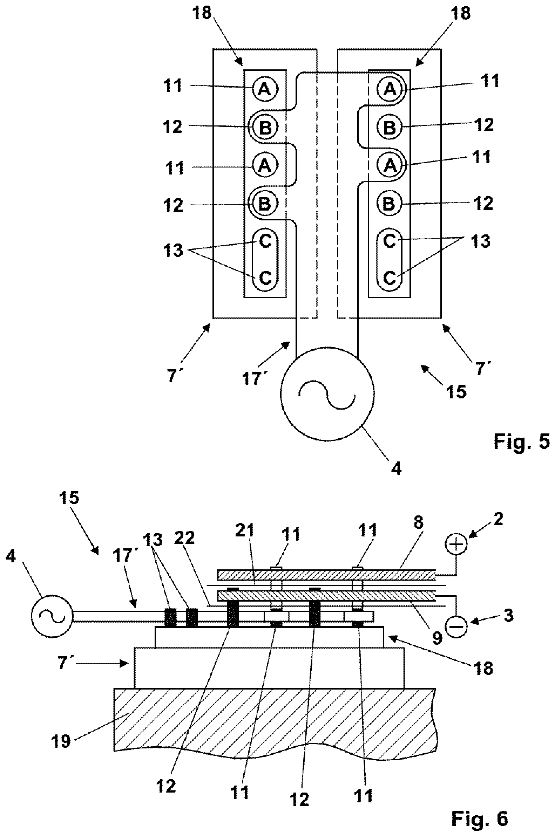

Die Wechselrichterbrücke 15 gemäß Fig. 3, die im Gegensatz zu der Wechselrichterbrücke 1 gemäß Fig. 1 für höhere Spannungen zwischen ihren DC-Eingängen 2 und 3, aber für geringere Ströme ausgelegt ist, ist in **Fig. 5** durch zwei Halbleiterbausteine 7' realisiert, die sich von den Halbleiterbausteinen 7 gemäß den Fig. 2 und 4 dadurch unterscheiden, dass sie jeweils zwei Anschlüsse 11 bis 13 in einem exponierten Anschlussbereich 18 aufweisen. Das Anschlusselement 17' ist entsprechend etwas anders ausgeformt als das Anschlusselement 17 gemäß Fig. 4. Die Busbars 8 und 9 gemäß den Fig. 2 und 4 sind in Fig. 5 nicht dargestellt.

Es ist möglich, die Wechselrichterbrücke 15 gemäß Fig. 3 auf einfache Art und Weise zusätzlich für höhere Ströme auszulegen. Dazu kann in der entsprechenden Realisation gemäß Fig. 4 jeweils ein weiterer Halbleiterbaustein 7, der eine Reihenschaltung aus zwei Halbleiterschaltern 6 aufweist, sowohl links als auch rechts von den bereits dargestellten Halbleiterbausteinen 7 angeordnet werden. Der links des vorhandenen linken Halbleiterbausteins 7 angeordnete weitere Halbleiterbaustein 7 wird an seinen Anschlusspunkten A und B mit dem linken Halbleiterbaustein 7 elektrisch parallel geschaltet. Gleiches gilt für die Anschlusspunkte A und B des vorhandenen rechten Halbleiterbausteins 7 und des rechts davon liegenden weiteren Halbleiterbausteins 7. Für die links liegenden Halbleiterbausteine 7 kann die Parallelschaltung ihrer Anschlusspunkte A beispielsweise so erfolgen, dass der Anschluss 11 des weiteren Halbleiterbausteins 7 jeweils in gleicher Art an die DC-Busbar 8 angeschlossen ist, wie der Anschluss 11 des bestehenden linken Halbleiterbausteins 7. Die Parallelschaltung der Anschlusspunkte B der linken Halbleiterbausteine 7 kann beispielsweise über eine abgewinkelte Verlängerung des Anschlusselementes 17 erfolgen. Auf entsprechende Weise lässt sich auch eine Parallelschaltung der Anschlusspunkte A und B der rechten Halbleiterbausteine 7 realisieren.

In der Seitenansicht der Ausführungsform gemäß Fig. 5 mit Blickrichtung von rechts in Fig. 5, wie sie in **Fig. 6** zu sehen ist, sind zusätzlich die DC-Busbars 8 und 9 dargestellt. Hier ist schematisch gezeigt, wie die DC-Busbar 9 an die Anschlüsse 12 des voll sichtbaren vorne liegenden Halbleiterbausteins 7' angeschlossen ist, während die DC-Busbar 8 an die Anschlüsse 11 des ansonsten verdeckten, weil weiter hinten liegenden Halbleiterbausteins 7' angeschlossen ist. Das Anschlusselement 17' ist an die Anschlüsse 11 des vorne liegenden Halbleiterbausteins 7' und die Anschlüsse 12 des dahinter liegenden Halbleiterbausteins 7' angeschlossen. Die Anschlüsse 13 sind wie in Fig. 5 nicht kontaktiert. Die Halbleiterbausteine 7' sind auf einem Kühlkörper 19 angeordnet, der parallel zu den DC-Busbars 8 und 9 auf einer ihrer Anschlussseite gegenüberliegenden Kontaktierseite der Halbleiterbausteine 7' verläuft. Nur angedeutet sind in Fig. 6 Isolationsschichten 21 und 22 zwischen den DC-Busbars 8 und 9 und der DC-Busbar 9 und dem Anschlusselement 17'. Zwischen den Rändern der DC-Busbars 8 und 9 sowie des Kühlkörpers 19 kann eine Mehrzahl von Wechselrichterbrücken 15 aus jeweils baugleichen Halbleiterbausteinen 7' ausgebildet sein. Beispielsweise können drei Wechselrichterbrücken 15 zwischen den Rändern der DC-Busbars 8 und 9 mit ihren zugeordneten Anschlusselementen 17' einen dreiphasigen AC-Anschluss bereitstellen. Alternativ ist jedoch auch möglich, dass alle Anschlusselemente 17' der Wechselrichterbrücken an eine hier nicht dargestellte Stromsammelschiene als gemeinsamer AC-Ausgang angeschlossen sind.

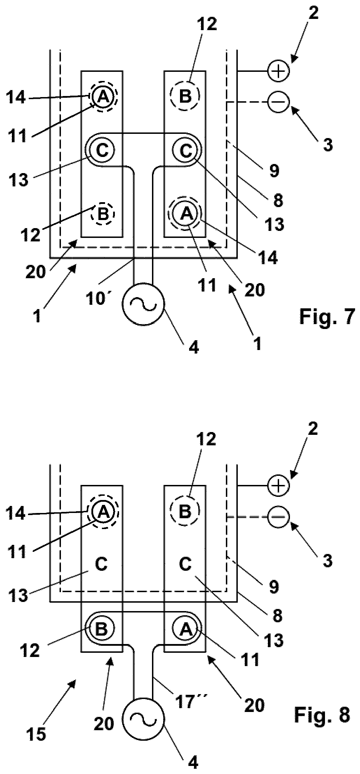

**Fig. 7** illustriert eine Wechselrichterbrücke 1 gemäß Fig. 1 realisiert mit anderen Halbleiterbausteinen 20 als in Fig. 2. Dabei beziehen sich die Unterschiede im Wesentlichen auf die räumliche Anordnung der Anschlüsse 11 bis 13, die zu den Anschlusspunkten A bis C gemäß Fig. 1 führen. Außerdem ist hier der eine Halbleiterbaustein 20 gegenüber dem anderen Halbleiterbaustein 20, der parallel zu ihm im Abstand angeordnet ist, um 180° in der Zeichenebene verdreht. Um dieselben Anschlusspunkte wie in Fig. 2 zu erreichen, erstrecken sich die die DC-Eingänge 2 und 3 ausbildenden DC-Busbars 8 und 9 über die gesamten Anschlüsse 11 bis 13 beider Halbleiterbausteine 20. Entsprechend erstreckt sich das Anschlusselement 10' hier bis unter die Busbars 8 und 9.

**Fig. 8** zeigt eine Realisation der Wechselrichterbrücke 15 gemäß Fig. 3 mit denselben Halbleiterbausteinen 20 wie in Fig. 7 und auch mit derselben relativen Anordnung dieser Halbleiterbausteine 20. Allerdings ist der gemeinsame Rand der DC-Busbars 8 und 9 gegenüber Fig. 7 nach hinten versetzt. So überdecken die Busbars 8 und 9 hier nicht alle Anschlüsse der Halbleiterbausteine 20, sondern lassen den Anschluss 12 des einen und den Anschluss 11 des anderen Halbleitebausteins 20 frei, an die das zu dem AC-Ausgang 4 führende Anschlusselement 17" angeschlossen ist. D. h. das Anschlusselement 17" wird hier nicht von den DC-Busbars 8 und 9 überlappt. Diese Ausführungsform kann bei höheren Spannungen zwischen den DC-Busbars 8 und 9 eine bessere Isolation zwischen der DC-Busbar 9 und dem Anschlusselement 17 gewährleisten, als dies für die entsprechende Ausführungsform gemäß Fig. 4 zwischen der dortigen DC-Busbar 9 und dem AC-Anschlusselement 17 der Fall ist.

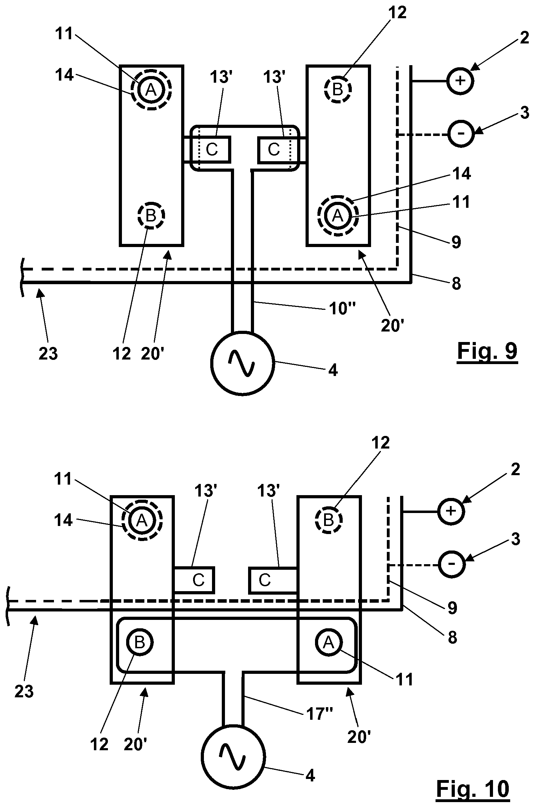

**Fig. 9** zeigt eine Wechselrichterbrücke gemäß Fig. 1 realisiert mit Halbleiterbausteinen 20'. Diese Halbleiterbausteine 20' weisen verglichen mit den Halbleiterbausteinen 20 gemäß den Fig. 7 und 8 Anschlüsse 13' zu den Anschlusspunkten C gemäß Fig. 1 an Ausgangsanschlussseiten der Halbleiterbausteine 20' auf, die gegenüber Eingangsanschlussseiten der Halbleiterbausteine 20', an denen die Anschlüsse 11 und 12 zu den Anschlusspunkten A und B gemäß Fig. 1 ausgebildet sind, um 90° abgewinkelt und einander zugewandt sind. Das Anschlusselement 10" kann hierzu aus Richtung des AC-Anschlusses 4 betrachtet im Bereich der Anschlusspunkte C "U"-förmig abgebogene Kanten aufweisen. Dies ist in Fig. 9 in Form von gestrichelten Linien an dem Anschlusselement 10" dargestellt. Diese Kanten treffen stirnseitig auf die Anschlusspunkte C und können so mit diesen verbunden, z. B. verschraubt werden. Es ist jedoch auch möglich, dass das Anschlusselement 10" ohne "U"-förmig abgebogene Kanten ausgeführt ist und aus Richtung der Draufsicht auf Fig. 9 mit den seitlich angeordneten Anschlüsse 13' verbunden, z.B. verschraubt ist. Das Anschlusselement 10" kann daher die Anschlüsse 13' zwischen den Halbleiterbausteinen 20' mit größerem Abstand zu den DC-Busbars 8 und 9 als in der Ausführungsform gemäß Fig. 7 verbinden, wodurch eine unerwünschte kapazitive Kopplung des Anschlusselementes 10" mit den DC-Busbars 8, 9 reduziert wird.

Die in **Fig. 10** gezeigte Realisation der Wechselrichterbrücke 15 gemäß Fig. 3 mit denselben Halbleiterbausteinen 20' wie in Fig. 9 weist grundsätzlich dieselben Unterschiede zu Fig. 9 auf, wie sie in Fig. 8 gegenüber Fig. 7 zu sehen sind. Das Anschlusselement 17" ist außerhalb des von den DC-Busbars 8 und 9 überdeckten Bereichs an je einen Anschluss 12 des einen Halbleiterbausteins 20' und einen Anschluss 11 des anderen Halbleiterbausteins 20' angeschlossen. Der durch die hier ungenutzten seitlich abstehenden Anschlusselemente 13' vergrößerte Abstand der Halbleiterbausteine 20' kann durch Verdrehen der beiden Halbleiterbausteine 20' um jeweils 180° um ihre normal zur Zeichenebene verlaufenden Hochsachsen beseitigt werden, so dass die Anschlüsse 13' jeweils nach außen weisen. Es versteht sich, dass auch dann der Anschluss 11 des einen Halbleiterbausteins 20' an die DC-Busbar 8 und der Anschluss 12 des anderen Halbleiterbausteins 20' an die DC-Busbar 9 anzuschließen ist.

In den Fig. 9 und 10 ist weiterhin angedeutet, dass ein gemeinsamer Rand 23 der DC-Busbars 8 und 9 eine größere Erstreckung als nur für den Anschluss der beiden Halbleiterbausteine 20' aufweisen kann, um zum Beispiel weitere Halbleiterbausteine 20' an die DC-Busbars 8 und 9 anzuschließen. Dies kann dem Zweck der Ausbildung von mehreren Wechselrichterbrücken eines mehrphasigen Wechselrichters zwischen den DC-Busbars 8 und 9 dienen. Auch in den Ausführungsformen gemäß Fig.9 bzw. Fig. 10 werden baugleiche Halbleiterbausteine 20' zur Umsetzung der Wechselrichterbrücken 1 bzw. 15 verwendet. Dies ist ebenso bei der Umsetzung der Wechselrichterbrücke 1 gemäß Fig. 2 bzw. der Umsetzung der Wechselrichterbrücke 15 gemäß Fig. 4 der Fall. Analog weist die Umsetzung der Wechselrichterbrücke 1 gemäß Fig. 7 bzw. die Umsetzung der Wechselrichterbrücke 15 gemäß Fig. 8 baugleiche Halbleiterbausteine 20 auf. In Fig. 5 ist lediglich die Umsetzung der Wechselrichterbrücke 15 dargestellt. Auch hier würde jedoch eine entsprechende Umsetzung der Wechselrichterbrücke 1 baugleiche Halbleiterbausteine 7' wie diejenigen der Fig. 5 aufweisen. Eine Umsetzung eines an andere Strom- und/oder Spannungsverhältnisse angepassten Wechselrichters ist daher nicht notwendigerweise an unterschiedliche Bauformen der Halbleiterbausteine geknüpft, sondern kann unter Nutzung jeweils baugleicher Halbleiterbausteine (7, 7', 20, 20') erfolgen.

### BEZUGSZEICHENLISTE

- 1: Wechselrichterbrücke
- 2: DC-Eingang
- 3: DC-Eingang
- 4: AC-Ausgang
- 5: Parallelschaltung
- 6: Halbleiterschalter
- 7: Halbleiterbaustein
- 7': Halbleiterbaustein
- 8: DC-Busbar
- 9: DC-Busbar
- 10: Anschlusselement
- 10': Anschlusselement
- 10": Anschlusselement
- 11: Anschluss
- 12: Anschluss
- 13: Anschluss
- 13': Anschluss
- 14: Ausnehmung
- 15: Wechselrichterbrücke
- 16: Reihenschaltung
- 17: Anschlusselement
- 17': Anschlusselement
- 17": Anschlusselement
- 18: Anschlussbereich
- 19: Kühlkörper
- 20: Halbleiterbaustein
- 20': Halbleiterbaustein
- 21: Isolationsschicht
- 22: Isolationsschicht
- 23: Rand
- A: Anschlusspunkt/Endpunkt
- B: Anschlusspunkt/Endpunkt
- C: Anschlusspunkt/Zwischenpunkt

## Patentansprüche

1. Wechselrichter mit einer eingangsseitig zwischen zwei DC-Busbars (8, 9) geschalteten und ausgangsseitig an einen AC-Ausgang (4) angeschlossenen Wechselrichterbrücke (1, 15),
- wobei die beiden DC-Busbars (8, 9) einander überlappend in zueinander parallelen Ebenen verlaufen,
- wobei die Wechselrichterbrücke (1, 15) zwischen dem AC-Ausgang (4) und jeder DC-Busbar (8, 9) eine Teilschaltung aufweist,
- wobei Halbleiterbausteine (7, 7', 20, 20'), die die beiden Teilschaltungen ausbilden, nebeneinander angeordnet sind,
- wobei die Halbleiterbausteine (7, 7', 20, 20') über Anschlüsse (11 bis 13) an die beiden DC-Busbars (8, 9) und den AC-Ausgang (4) angeschlossen sind und
- wobei ein Anschlusselement (10', 10", 17, 17'), das zu dem AC-Ausgang (4) führt, die Halbleiterbausteine (7, 7', 20, 20') der beiden Teilschaltungen in einem von den DC-Busbars (8, 9) überlappten Bereich miteinander verbindet,
**dadurch gekennzeichnet,**
- **dass** jede zwischen dem AC-Ausgang (4) und einer der DC-Busbars (8, 9) vorgesehene Teilschaltung mehrere Halbleiterschalter (6) aufweist und
- **dass** das Anschlusselement (10', 10", 17, 17'), das zu dem AC-Ausgang (4) führt, auf der den Halbleiterbausteinen (7, 7', 20, 20') zugekehrten Seite der DC-Busbars (8, 9) in dem von den DC-Busbars (8, 9) überlappten Bereich beginnt, die Halbleiterbausteine (7, 7', 20, 20') der beiden Teilschaltungen dort miteinander verbindet, und unter den DC-Busbars (8, 9) hervortritt.

2. Wechselrichter nach Anspruch 1, **dadurch gekennzeichnet, dass** die Halbleiterbausteine (7, 7', 20, 20'), die die beiden Teilschaltungen ausbilden, längs eines gemeinsamen Rands (23) der beiden DC-Busbars (8, 9) angeordnet sind.

3. Wechselrichter nach einem der vorhergehenden Ansprüche, **dadurch gekennzeichnet, dass** die Anschlüsse (11 bis 13) an in gleicher Raumrichtung ausgerichteten Anschlussseiten der Halbleiterbausteine (7, 7', 20) ausgebildet sind und dass das Anschlusselement (10', 17, 17') zwischen den Anschlüssen (11 bis 13) der Halbleiterbausteine (7, 7'; 20) der beiden Teilschaltungen unter den DC-Busbars (8, 9) hervortritt.

4. Wechselrichter nach einem der Ansprüche 1 und 2, **dadurch gekennzeichnet, dass** die Anschlüsse (11 und 12) an die DC-Busbars (8, 9) an in gleicher Raumrichtung ausgerichteten Eingangsanschlussseiten der Halbleiterbausteine (20') ausgebildet sind, dass die Anschlüsse (13') an das Anschlusselement (10") an in paarweise einander entgegen gerichteten Ausgangsanschlussseiten der Halbleiterbausteine (20') ausgebildet sind und dass das Anschlusselement (10") zwischen den Halbleiterbausteinen (20') der beiden Teilschaltungen unter den DC-Busbars (8, 9) hervortritt.

5. Wechselrichter nach einem der vorhergehenden Ansprüche, **dadurch gekennzeichnet, dass** das Anschlusselement (10', 17, 17') unter den DC-Busbars (8, 9) in einer weiteren parallelen Ebene verläuft.

6. Wechselrichter nach einem der vorhergehenden Ansprüche, **dadurch gekennzeichnet, dass** zwischen den beiden DC-Busbars (8, 9) und zwischen der den Halbleiterbausteinen (7, 7', 20, 20') zugekehrten DC-Busbar (9) und dem Anschlusselement (10', 17, 17') eine Isolationsschicht (21, 22) angeordnet ist.

7. Wechselrichter nach einem der vorhergehenden Ansprüche, **dadurch gekennzeichnet, dass** jeweils einer der Halbleiterbausteine (7, 7', 20, 20') eine der Teilschaltungen ausbildet.

8. Wechselrichter nach einem der Ansprüche 1 bis 6, **dadurch gekennzeichnet, dass** jeder der Halbleiterbausteine (7, 7', 20, 20') jeweils mindestens eine Reihenschaltung von zwei Halbleiterschaltern (6) ausbildet und dass in jeder Teilschaltung mindestens zwei nebeneinander angeordnete Halbleiterbausteine (7, 7', 20, 20') parallel geschaltet sind.

9. Wechselrichter nach einem der vorhergehenden Ansprüche, **dadurch gekennzeichnet, dass** alle Halbleiterbausteine (7, 7', 20, 20') baugleich sind.

10. Wechselrichter nach einem der vorhergehenden Ansprüche, **dadurch gekennzeichnet, dass** jeder Halbleiterbaustein (7, 7', 20, 20') mindestens eine Reihenschaltung (16) von Halbleiterschaltern (6) aufweist, wobei an dem Halbleiterbaustein (7, 7', 20, 20') Anschlüsse (11 bis 13) zu Endpunkten (A, B) und zu einem Zwischenpunkt (C) der Reihenschaltung (16) ausgebildet sind, wobei der Zwischenpunkt (C) nach der Hälfte der Halbleiterschalter (6) der Reihenschaltung (16) ausgebildet ist.

11. Wechselrichter nach einem der vorhergehenden Ansprüche, **dadurch gekennzeichnet, dass** jeder Halbleiterbaustein (20) jeweils zwei Anschlüsse (11 bis 13) zu jedem Endpunkt (A, B) und zu dem Zwischenpunkt (C) der Reihenschaltung (16) aufweist.

12. Wechselrichter nach Anspruch 10 oder 11, **dadurch gekennzeichnet, dass** die Anschlüsse (13) zu den Zwischenpunkten (C) an Enden der Halbleiterbausteine (7, 7') in einem nicht durch die DC-Busbars (8, 9) abgedeckten Bereich der die Reihenschaltungen (16) ausbildenden Halbleiterbausteine (7, 7') angeordnet sind oder dass die Anschlüsse (13) zu den Zwischenpunkten (C) zwischen den Anschlüssen (11, 12) zu den Endpunkten (A, B) in einem durch die DC-Busbars (8, 9) abgedeckten Bereich der die Reihenschaltungen (16) ausbildenden Halbleiterbausteine (20) angeordnet sind.

13. Wechselrichter nach einem der vorhergehenden Ansprüche, **dadurch gekennzeichnet, dass** jede Teilschaltung zwei Halbleiterschalter (6) umfasst.

14. Wechselrichter nach einem der vorhergehenden Ansprüche, **dadurch gekennzeichnet, dass** die die Teilschaltungen mehrerer Wechselrichterbrücken (1, 15) ausbildenden Halbleiterbausteine (7, 7', 20, 20') an einen gemeinsamen Rand (23) derselben DC-Busbars (8, 9) angeschlossen sind.

15. Wechselrichter nach einem der vorhergehenden Ansprüche, **dadurch gekennzeichnet, dass** die die Teilschaltungen ausbildenden Halbleiterbausteine (7, 7', 20, 20') mit ihren den DC-Busbars (8, 9) abgewandten Montageseiten auf einem Kühlkörper (19) montiert sind.

16. Wechselrichter nach einem der vorhergehenden Ansprüche, **dadurch gekennzeichnet, dass** die die Teilschaltungen mehrerer Wechselrichterbrücken (1, 15) ausbildenden Halbleiterbausteine (7, 7', 20, 20') auf einem Rand desselben Kühlkörpers (19) montiert sind.

## Claims

1. An inverter comprising an inverter bridge (1, 15), which is connected on the input side between two DC busbars (8, 9) and on the output side to an AC output (4),
- wherein the two DC busbars (8, 9) extend, overlapping one another, in mutually parallel planes,
- wherein the inverter bridge (1, 15) has a subcircuit between the AC output (4) and each DC busbar (8, 9),
- wherein semiconductor modules (7, 7', 20, 20'), which form the two subcircuits, are arranged next to one another,
- wherein the semiconductor modules (7, 7', 20, 20') are connected to the two DC busbars (8, 9) and the AC output (4) via connections (11 to 13), and
- wherein a connection element (10', 10", 17, 17'), which leads to the AC output (4), connects the semiconductor modules (7, 7', 20, 20') of the two subcircuits to one another in a region overlapped by the DC busbars (8, 9),
**characterized**
- **in that** each subcircuit provided between the AC output (4) and one of the DC busbars (8, 9) has a plurality of semiconductor switches (6), and
- **in that** the connection element (10', 10", 17, 17'), which leads to the AC output (4), begins in the region overlapped by the DC busbars (8, 9) on that side of the DC busbars (8, 9) which faces the semiconductor modules (7, 7', 20, 20'), connects the semiconductor modules (7, 7', 20, 20') of the two subcircuits to one another there, and emerges beneath the DC busbars (8, 9).

2. The inverter as claimed in claim 1, **characterized in that** the semiconductor modules (7, 7', 20, 20') which form the two subcircuits are arranged along a common rim (23) of the two DC busbars (8, 9).

3. The inverter as claimed in one of the preceding claims, **characterized in that** the connections (11 to 13) are formed on connection sides, oriented in the same spatial direction, of the semiconductor modules (7, 7', 20), and **in that** the connection element (10', 17, 17') emerges beneath the DC busbars (8, 9) between the connections (11 to 13) of the semiconductor modules (7, 7'; 20) of the two subcircuits.

4. The inverter as claimed in either of claims 1 and 2, **characterized in that** the connections (11 and 12) to the DC busbars (8, 9) are formed on input connection sides, oriented in the same spatial direction, of the semiconductor modules (20'), **in that** the connections (13') to the connection element (10") are formed on output connection sides, which are opposite one another in pairs, of the semiconductor modules (20'), and **in that** the connection element (10") emerges beneath the DC busbars (8, 9) between the semiconductor modules (20') of the two subcircuits.

5. The inverter as claimed in one of the preceding claims, **characterized in that** the connection element (10', 17, 17') extends beneath the DC busbars (8, 9) in a further parallel plane.

6. The inverter as claimed in one of the preceding claims, **characterized in that** an insulation layer (21, 22) is arranged between the two DC busbars (8, 9) and between that DC busbar (9) which faces the semiconductor modules (7, 7', 20, 20') and the connection element (10', 17, 17').

7. The inverter as claimed in one of the preceding claims, **characterized in that** in each case one of the semiconductor modules (7, 7', 20, 20') forms one of the subcircuits.

8. The inverter as claimed in one of claims 1 to 6, **characterized in that** each of the semiconductor modules (7, 7', 20, 20') forms in each case at least one series circuit comprising two semiconductor switches (6), and **in that** at least two semiconductor modules (7, 7', 20, 20') arranged next to one another are connected in parallel in each subcircuit.

9. The inverter as claimed in one of the preceding claims, **characterized in that** all of the semiconductor modules (7, 7', 20, 20') are physically identical.

10. The inverter as claimed in one of the preceding claims, **characterized in that** each semiconductor module (7, 7', 20, 20') comprises at least one series circuit (16) of semiconductor switches (6), wherein connections (11 to 13) to end points (A, B) and to an intermediate point (C) of the series circuit (16) are formed on the semiconductor module (7, 7', 20, 20'), wherein the intermediate point (C) is formed after half of the semiconductor switches (6) in the series circuit (16).

11. The inverter as claimed in one of the preceding claims, **characterized in that** each semiconductor module (20) has in each case two connections (11 to 13) to each end point (A, B) and to the intermediate point (C) of the series circuit (16).

12. The inverter as claimed in claim 10 or 11, **characterized in that** the connections (13) to the intermediate points (C) are arranged at ends of the semiconductor modules (7, 7') in a region of the semiconductor modules (7, 7') forming the series circuits (16), which region is not covered by the DC busbars (8, 9) OR **in that** the connections (13) to the intermediate points (C) are arranged between the connections (11, 12) to the end points (A, B) in a region of the semiconductor modules (20) forming the series circuits (16), which region is covered by the DC busbars (8, 9).

13. The inverter as claimed in one of the preceding claims, **characterized in that** each subcircuit comprises two semiconductor switches (6).

14. The inverter as claimed in one of the preceding claims, **characterized in that** the semiconductor modules (7, 7', 20, 20') forming the subcircuits of a plurality of inverter bridges (1, 15) are connected to a common rim (23) of the same DC busbars (8, 9).

15. The inverter as claimed in one of the preceding claims, **characterized in that** the semiconductor modules (7, 7', 20, 20') forming the subcircuits are fitted with their fitting sides remote from the DC busbars (8, 9) on a heat sink (19).

16. The inverter as claimed in one of the preceding claims, **characterized in that** the semiconductor modules (7, 7', 20, 20') forming the subcircuits of a plurality of inverter bridges (1, 15) are fitted on a rim of the same heat sink (19).

## Revendications

1. Onduleur comprenant un pont onduleur (1, 15) connecté du côté de l'entrée entre deux barres-bus CC (8, 9) et raccordé du côté de la sortie à une sortie CA (4),
les deux barres-bus CC (8, 9) suivant un tracé en se chevauchant l'une l'autre dans des plans mutuellement parallèles,
le pont onduleur (1, 15) possédant un circuit partiel entre la sortie CA (4) et chaque barre-bus CC (8, 9),
des composants semiconducteurs (7, 7', 20, 20') qui forment les circuits partiels étant disposés les uns à côté des autres,
les composants semiconducteurs (7, 7', 20, 20') étant raccordés par des bornes (11 à 13) aux deux barres-bus CC (8, 9) et à la sortie CA (4) et
un élément de raccordement (10', 10", 17, 17'), qui mène à la sortie CA (4), reliant entre eux les composants semiconducteurs (7, 7', 20, 20') des deux circuits partiels dans une zone qui est chevauchée par les barres-bus CC (8, 9),
**caractérisé en ce**
**que** chaque circuit partiel qui se trouve entre la sortie CA (4) et l'une des barres-bus CC (8, 9) possède plusieurs commutateurs semiconducteurs (6) et
en ce que l'élément de raccordement (10', 10", 17, 17') qui mène à la sortie CA (4) commence sur le côté des barres-bus CC (8, 9) qui fait face aux composants semiconducteurs (7, 7', 20, 20') dans la zone chevauchée par les barres-bus CC (8, 9), y relie ensemble les composants semiconducteurs (7, 7', 20, 20') des deux circuits partiels, et fait saillie sous les barres-bus CC (8, 9).

2. Onduleur selon la revendication 1, **caractérisé en ce que** les composants semiconducteurs (7, 7', 20, 20') qui forment les deux circuits partiels sont disposés le long d'un bord (23) commun des deux barres-bus CC (8, 9).

3. Onduleur selon l'une des revendications précédentes, **caractérisé en ce que** les bornes (11 à 13) sont formées sur des côtés de raccordement des composants semiconducteurs (7, 7', 20) orientés dans la même direction spatiale et **en ce que** l'élément de raccordement (10', 17, 17') fait saillie sous les barres-bus CC (8, 9) entre les bornes (11 à 13) des composants semiconducteurs (7, 7'; 20) des deux circuits partiels.

4. Onduleur selon l'une des revendications 1 et 2, **caractérisé en ce que** les bornes (11 et 12) au niveau des barres-bus CC (8, 9) sont formées sur des côtés de raccordement d'entrée des composants semiconducteurs (20') orientés dans la même direction spatiale, **en ce que** les bornes (13') au niveau de l'élément de raccordement (10") sont formées sur des côtés de raccordement de sortie des composants semiconducteurs (20') orientés à l'opposé les uns des autres par paires et **en ce que** l'élément de raccordement (10") fait saillie sous les barres-bus CC (8, 9) entre les composants semiconducteurs (20') des deux circuits partiels.

5. Onduleur selon l'une des revendications précédentes, **caractérisé en ce que** l'élément de raccordement (10', 17, 17') suit un tracé dans un plan parallèle supplémentaire sous les barres-bus CC (8, 9).

6. Onduleur selon l'une des revendications précédentes, **caractérisé en ce qu'**une couche isolante (21, 22) est disposée entre les deux barres-bus CC (8, 9) et entre la barre-bus CC (9) qui fait face aux composants semiconducteurs (7, 7', 20, 20') et l'élément de raccordement (10', 17, 17').

7. Onduleur selon l'une des revendications précédentes, **caractérisé en ce que** l'un des composants semiconducteurs (7, 7', 20, 20') forme respectivement l'un des circuits partiels.

8. Onduleur selon l'une des revendications 1 à 6, **caractérisé en ce que** chacun des composants semiconducteurs (7, 7', 20, 20') forme respectivement au moins un circuit série de deux commutateurs semiconducteurs (6) et **en ce qu'**au moins deux composants semiconducteurs (7, 7', 20, 20') sont branchés en parallèle dans chaque circuit partiel.

9. Onduleur selon l'une des revendications précédentes, **caractérisé en ce que** tous les composants semiconducteurs (7, 7', 20, 20') sont de construction identique.

10. Onduleur selon l'une des revendications précédentes, **caractérisé en ce que** chaque composant semiconducteur (7, 7', 20, 20') possède au moins un circuit série (16) de commutateurs semiconducteurs (6), des bornes (11 à 13) vers les points d'extrémité (A, B) et vers un point intermédiaire (C) du circuit série (16) étant formées au niveau du composant semiconducteur (7, 7', 20, 20'), le point intermédiaire (C) étant formé après la moitié des commutateurs semiconducteurs (6) du circuit série (16).

11. Onduleur selon l'une des revendications précédentes, **caractérisé en ce que** chaque composant semiconducteur (20) possède respectivement deux bornes (11 à 13) vers chaque point d'extrémité (A, B) et vers le point intermédiaire (C) du circuit série (16).

12. Onduleur selon la revendication 10 ou 11, **caractérisé en ce que** les bornes (13) vers les points intermédiaires (C) sont disposées aux extrémités des composants semiconducteurs (7, 7') dans une zone non recouverte par les barres-bus CC (8, 9) des composants semiconducteurs (7, 7') qui forment les circuits série (16), ou **en ce que** les bornes (13) vers les points intermédiaires (C) sont disposées entre les bornes (11, 12) vers les points d'extrémité (A, B) dans une zone recouverte par les barres-bus CC (8, 9) des composants semiconducteurs (20) qui forment les circuits série (16).

13. Onduleur selon l'une des revendications précédentes, **caractérisé en ce que** chaque circuit partiel comporte deux commutateurs semiconducteurs (6).

14. Onduleur selon l'une des revendications précédentes, **caractérisé en ce que** les composants semiconducteurs (7, 7', 20, 20') qui forment les circuits partiels de plusieurs ponts onduleurs (1, 15) sont raccordés à un bord (23) commun des mêmes barres-bus CC (8, 9).

15. Onduleur selon l'une des revendications précédentes, **caractérisé en ce que** les composants semiconducteurs (7, 7', 20, 20') qui forment les circuits partiels sont montés sur un radiateur (19) avec leurs côtés de montage à l'opposé des barres-bus CC (8, 9).

16. Onduleur selon l'une des revendications précédentes, **caractérisé en ce que** les composants semiconducteurs (7, 7', 20, 20') qui forment les circuits partiels de plusieurs ponts onduleurs (1, 15) sont montés sur un bord du même radiateur (19) .
